(19) Europäisches Patentamt
European Patent Office
Office européen des brevets

(11) Numéro de publication: **0 259 229 B1**

(12) **FASCICULE DE BREVET EUROPEEN**

(45) Date de publication de fascicule du brevet: **29.05.91**

(51) Int. Cl.5: **C08G 61/00**, H01B 1/12

(21) Numéro de dépôt: **87401966.4**

(22) Date de dépôt: **02.09.87**

(54) **Polyfluorènes 9,9'-disubstitués, leur procédé de préparation et leurs applications en électro-optique et électrochimie.**

(30) Priorité: **03.09.86 FR 8612383**

(43) Date de publication de la demande: **09.03.88 Bulletin 88/10**

(45) Mention de la délivrance du brevet: **29.05.91 Bulletin 91/22**

(84) Etats contractants désignés: **DE GB**

(56) Documents cités:

**MAKROMOLEKULARE CHEMIE, vol. 177, no. 8, août 1976, pages 2221-2233, Heidelberg, DE; D. BRAUN et al.: "Stabile Polykohlenstoffradikale, 4 - Über Polyradikale vom 9-Aryl-9-fluorenyl-Typ"**

(73) Titulaire: **ETAT FRANCAIS représenté par le Ministre des PTT (Centre National d'Etudes des Télécommunications)
38-40 rue du Général Leclerc
F-92131 Issy-les-Moulineaux(FR)**

Titulaire: **UNIVERSITE DE RENNES I
2, rue du Thabor
F-35000 Rennes(FR)**

(72) Inventeur: **Froyer, Gérard
Rue du Rusquet Brelevenez
F-22300 Lannion(FR)**
Inventeur: **Pelous, Yvan
22, Résidence Duroux
F-22300 Lannion(FR)**
Inventeur: **Sarrazin, Jean
22, rue Hyl
F-35510 Cesson Sevigne(FR)**

(74) Mandataire: **Ahner, Francis et al
CABINET REGIMBEAU, 26, avenue Kléber
F-75116 Paris(FR)**

**EP 0 259 229 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des polyfluorènes disubstitués, leur procédé de préparation et les applications de ces polyfluorènes en électro-optique et comme modificateur chimique d'électrodes métalliques.

Les polyfluorènes selon l'invention ont pour formule générale I :

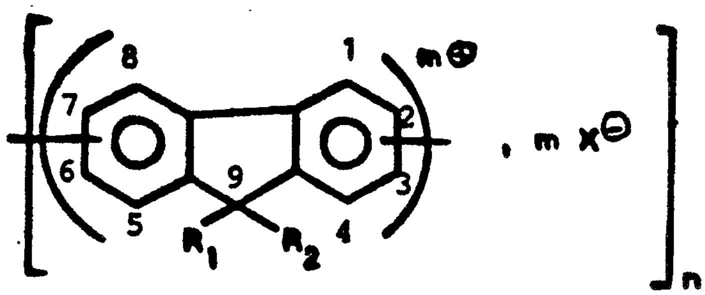

(I)

où

$R_1$ et $R_2$ sont identiques ou différents et représentent chacun un radical alcoyle, aryle ou aralcoyle linéaire ou ramifié, comprenant 1 à 10 atomes de carbone, ou bien

$R_1$ et $R_2$ forment ensemble un radical benzylidène ou un cycle dioxolanne,

X représente un anion du type fluoroborate, hexafluorophosphate, ou perchlorate,

n représente le degré de polymérisation,

m représente le degré d'oxydation du polymère, et 0 m < 1.

Il est connu de préparer le polyfluorène dans lequel $R_1$ et $R_2$ représentent l'hydrogène par oxydation électro-chimique du fluorène. (J. RAULT-BERTHELOT, J. SIMONET, J. Electro. Anal. Chem. 182, 187 (1985) ).

L'élaboration de matériaux électrochromes polychromes, nécessite que ces matériaux possèdent au moins trois états d'oxydation différents.

Le polyfluorène simple ($R_1$ et $R_2$ représentant H) ne présente que deux états d'oxydation, l'état neutre et l'état dopé p, le troisième état (dopage n) étant empêché par la réduction des protons du carbone 9. Cependant, certains dérivés de cette famille, substitués en position 9 présentent trois états d'oxydation et sont susceptibles de posséder le caractère polychrome.

De plus, pour des substituants $R_1$ et $R_2$ différents, le carbone 9, asymétrique, confère au polymère des propriétés non linéaires.

L'invention concerne en particulier les polyfluorènes de formule I pour lesquels $R_1$ et $R_2$, identiques ou différents, représentent $-CH_3$, $-C_2H_5$, $-C_6H_5$, $-(CH_2)_p-C_6H_5$, p étant un entier allant de 1 à 4, ou $R_1$ et $R_2$ forment ensemble un radical benzylidène = $CH-C_6H_5$.

Parmi ces composés, sont particulièrement préférés les polyfluorènes de formule I où $R_1$ et $R_2$ représentent $-CH_3$, ou $R_1$ représente $CH_3$ et $R_2$ représente un radical benzyle, ou encore $R_1$ et $R_2$ forment ensemble un radical benzylidène.

La présente invention concerne également un procédé de préparation des polyfluorènes selon l'invention,caractérisé en ce que l'on réalise l'électropolymérisation, par oxydation électrochimique en régime potentiostatique ou en intensiostatique, d'au moins un monomère du type

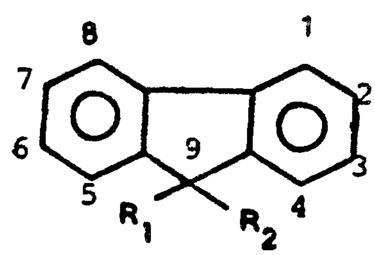

où $R_1$ et $R_2$ ont les mêmes significations que précédemment.

Selon l'invention, on réalise l'électropolymérisation à l'aide d'une cellule électrolytique comportant une

électrode de référence, une électrode de travail et une contre-électrode.

Quel que soit le mode d'électropolymérisation choisi, intensiostatique ou potentiostatique, il est nécessaire de limiter la tension à des potentiels inférieurs à des valeurs provoquant des réactions secondaires comme une réticulation du polymère.

Ainsi, en régime potentisotatique en particulier, on réalise l'électropolymérisation dans une fourchette de tension allant d'environ + 1,3 à + 1,5 V par rapport à l'électrode de référence.

Bien que d'autres électrodes de référence puissent être utilisées, on choisit de préférence le système $Ag/Ag^{+}$ 0,1 M comme électrode de référence ; on prévoit alors un pont comportant le même électrolyte que celui de la solution d'électropolymérisation.

Comme électrode de travail, c'est-à-dire électrode où se dépose le polyfluorène, on peut choisir tout support conducteur non corrodable à la tension d'électropolymérisation, et notamment toute électrode réalisée à partir de platine poli, de carbone vitreux, de graphite ou de verre recouvert d'un oxyde conducteur,comme $In_2O_3$ ou $SnO_2$, ou de verre recouvert d'un oxyde mixte conducteur l'oxyde mixte d'indium et d'étain (ITO), par exemple.

Comme matériau pour la contre-électrode, on peut choisir en particulier du platine, du carbone vitreux, ou de l'acier inoxydable.

Il peut s'agir en particulier d'une grille en platine, d'une plaque en carbone vitreux ou de tige d'acier inoxydable

Selon l'invention, l'électropolymérisation est réalisée en présence d'un sel de fond, anhydre, constitué par un cation ammonium quaternaire ou de métal alcalin et d'un anion non oxydable au potentiel d'électropolymérisation. La nature de ce sel de fond ou électrolyte est déterminante dans la mesure où son anion contribue au dopage du polyfluorène. Cet anion peut être en partie choisi parmi $BF_4^-$, $PF_6^-$, $ClO_4^-$.

De préférence, la concentration de l'électrolyte, nécessairement sec, peut être compris entre 0,1 M et 1 M.

Comme solvant pour réaliser l'électropolymérisation, on peut choisir tout solvant suffisamment conducteur et non oxydable au potentiel d'électropolymérisation. Selon l'invention, on peut choisir notamment l'acétonitrile, le nitrométhane, le benzonitrile, ou le chlorure de méthylène.

Afin de garantir le caractère anhydre de l'électrolyte, on peut réaliser l'électropolymérisation en présence d'alumine activée.

De même, afin de garantir le bon déroulement de l'électropolymérisation, il peut être nécessaire de réaliser l'électropolymérisation en atmosphère neutre, c'est-à-dire que l'on balaye la cellule électrolytique par un gaz neutre et sec, notamment l'argon.

Enfin, l'électropolymérisation est menée dans des conditions optimales pour des concentrations en monomères comprises entre environ $5.10^{-2}$ M et $5.10^{-1}$M.

Les polymères obtenus sont des composés insolubles, et infusibles. Déposés en couche mince, ils forment des films de couleurs déterminées et variables selon leur état d'oxydation. En couches épaisses, ces composés sont friables, de couleur marron foncé à noir.

Pour réaliser des polyfluorènes non dopés, c'est-à-dire des polyfluorènes pour lesquels m est sensiblement égal à 0, il peut être nécessaire, après la mise en oeuvre du procédé selon l'invention qui mène à des polymères dopés, de mener en outre étape supplémentaire de réduction indirecte.

Il est également possible de réaliser selon l'invention une électrocopolymérisation. Les copolymères préférés sont ceux qui se fixent facilement sur les électrodes de verre, conductrices semi-transparentes, comme le polyfluorène.

La présente invention concerne également les applications de polymères selon l'invention en électro-optique et comme modificateurs chimiques d'électrodes métalliques.

On peut les utiliser notamment à titre de transducteurs électro-optiques dans des cellules électrochromes.

Pour cette application, à titre de transducteurs électro-optiques, il est nécessaire que les polymères possèdent trois états d'oxydation différents et stables.

Dans ce cas, on a pu réaliser des polyfluorènes ayant des temps de commutation entre les états inférieurs à 40 ms, et une conductivité des états dopés n ou p supérieure ou égale à $10^{-2}$ $(\Omega\ cm)^{-1}$.

Quelle que soit la nature des substituants $R_1$ et $R_2$, les polyfluorènes selon l'invention peuvent être utilisés à titre de modificateurs chimiques d'électrodes métalliques.

Une fois que le film de polyfluorène est déposé sur l'électrode de travail, on utilise cette électrode dans d'autres réactions électrochimiques, les espèces chimiques diffusant à travers le film de polyfluorène avant d'être électrochimiquement transformées au contact de l'électrode métallique.

De plus, les polyfluorènes comportant deux substituants différents en position 9, sont particulièrement adaptés à la réalisation de dispositifs optiques destinés à l'optique non linéaire.

D'autres caractéristiques et avantages de l'invention apparaîtront à la lecture des exemples ci-après et sur les dessins annexés.

Les figures 1,2 et 3 représentent les résultats de la voltampérométrie pour trois des polyfluorènes selon l'invention. La figure 4 représente les spectres IR (pastilles KBr) du monomère diméthylé (a) ainsi que des polymères dopés $PF_6^-$ (b), $BF_4^-$ (c) et non dopés (m≃0) (d).

EXEMPLE 1 :

POLY(9,9'-DIMETHYLFLUORENE) :

La synthèse du monomère 9,9'-diméthylfluorène

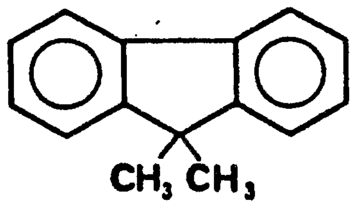

a été réalisée selon la technique écrite par R.G. HARVEY et al. (J.O.C. 1976 41 (16) page 2706). Il s'agit d'une déprotonation du fluorène par le butyl-lithium suivie d'une réaction avec l'iodure ou le bromure de méthyle. On a alors réalisé la polymérisation de ces monomères avec comme sel de fond $Bu_4N^+BF_4^-$0,2 M dans l'acétonitrile. Le potentiel d'oxydation du monomère est de 1 330 mV par rapport à $Ag/Ag^+NO_3^-$ 0,1 M dans $CH_3CN$.

Le rendement de polymérisation, c'est à dire le nombre de monomères polymérisés déposés par rapport au nombre de monomères oxydés lors de la réaction est de l'ordre de 10 à 30 %. Les oligomères passent en partie en solution.

Le comportement électrochimique du polymère obtenu étudié dans $BU_4NBF_4$ 0,2 M $CH_3CN$ est représenté à la figure 1.

On a réalisé l'électropolymérisation sur un support métallique et sur un verre semi-transparent.

Le polymère est stable à l'air et conserve à l'air ses propriétés électrochromes. Ce polymère est stable environ 5 minutes à son potentiel d'oxydation ou de réduction.

La densité du polymère, mesurée par la méthode de flottation dans un mélange de chloroforme et d'acétate d'éthyle à 25° C est d'environ 1,4 ± 0,5.

La figure 4, comme indiqué ci-dessus, représente les spectres IR (KBr en pastille) pour le monomère et des polymères dopés ou non.

Le polymère non dopé a été obtenu par réduction indirecte d'un polymère dopé (ici par $BF_4^-$) par le radical anion de chloranil, dans une solution à $10^{-1}$ M de tétrabutyl ammonium tétrafluoroborate dans le diméthyl formamide.

Les numéros de liaisons apparaissant sur les spectres sont indiqués sur le schéma suivant qui représente le fluorène avant et après polymérisation.

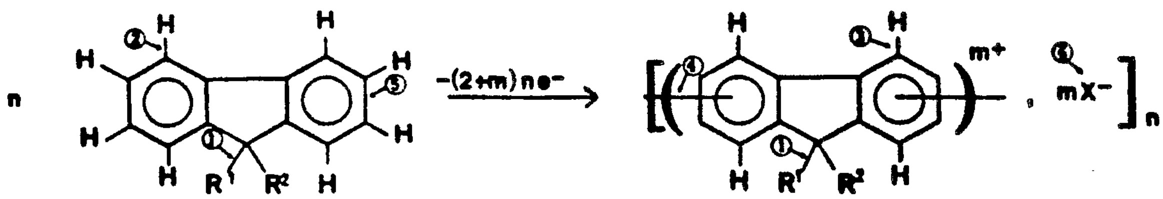


$x^- = BF_4^-$ (b), $PF_6^-$ (c)

Par microanalyse et analyses par chronocoulométries et voltaampérométrie cycliques, on a pu déterminer que le polymère a un degré d'oxydation maximum d'un électron par motif monomère. A la formation, le degré d'oxydation du polymère est d'environ un électron pour trois à quatre motifs.

EXEMPLE 2:

POLY (BENZALFLUORENE)

Le benzalfluorène de formule

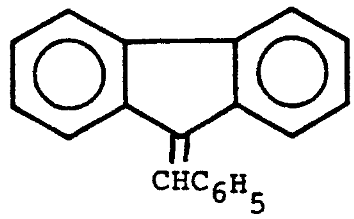

est synthétisé selon la technique décrite par Y. SPRINZAK (Jour.Amer. Chem. Soc. 1956 79 p 466), par condensation du fluorène et du benzaldéhyde.

L'électropolymérisation a été réalisée dans $CH_3CN$, $CH_2Cl_2$, dans le carbonate de propylène, le potentiel d'oxydation du monomère est de 1 225 mV.

Pour la synthèse du polyfluorène dans $CH_3CN$, avec pour électrolyte $Bu_4NBF_4$ 0,2 M dans $CH_3CN$, le taux de polymère déposé est de l'ordre de 10 %.

La figure 2 représente le comportement électrochimique du polymère, étudié dans $BuN_4NBF_4$ 0,2 M, $CH_3CN$.

EXEMPLE 3 :

POLY(9-METHYL,9'-BENZYLFLUORENE)

La synthèse du 9-méthyl, 9'-benzylfluorène de formule :

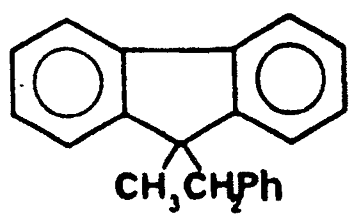

est réalisée de la même façon que la synthèse du diméthylfluorène, en présence de chlorure de benzoyle.

Le potentiel d'oxydation du monomère est de 1 320 mV.

On a réalisé la polymérisation dans $CH_3CN$ ou le taux de formation est de l'ordre de 10 %, dans $CH_2Cl_2$ et dans un mélange $CH_3CN$-$CH_2Cl_2$ 50-50.

Le comportement électrochimique du polymère étudié dans $BuNBF_4$ 0,2 M $CH_3CN$ est représenté à la figure 3.

## Revendications

**1.** Polyfluorène de formule générale (I) :

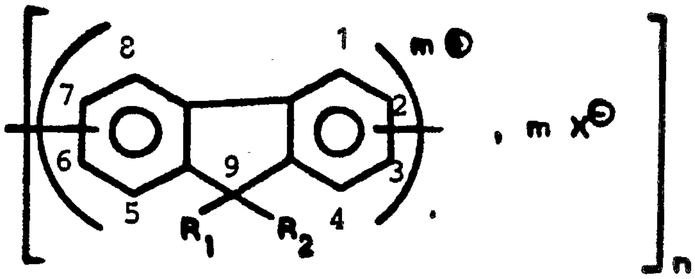

(I)

où

$R_1$ et $R_2$ sont identiques ou différents et représentent chacun un radical alcoyle, aryle ou aralcoyle linéaire ou ramifié, comprenant 1 à 10 atomes de carbone, ou bien

$R_1$ et $R_2$ forment ensemble un radical benzylidène ou un cycle dioxolanne,

X représente un anion du type fluoroborate, hexafluorophosphate, ou perchlorate,

n représente le degré de polymérisation,

m représente le degré d'oxydation du polymère, et 0 m < 1.

2. Polyfluorène selon la revendication 1, caractérisé en ce que m a une valeur environ égale à 0,25.

3. Polyfluorène selon l'une des revendications 1 ou 2, caractérisé en ce que $R_1$ et $R_2$, identiques ou différents, représentent $-CH_3$, $-C_2H_5$, $-C_6H_5$, $-(CH_2)_p-C_6H_5$, p étant un entier allant de 1 à 4, ou $R_1$ et $R_2$ forment ensemble un radical benzylidène $= CH-C_6H_5$.

4. Polyfluorène selon l'une des revendications 1 à 3 où $R_1$ représente $-CH_3$ et $R_2$ représente $-CH_3$ ou $-CH_2-C_6H_5$, ou $R_1$ et $R_2$ forment ensemble un radical benzylidène $= CH-C_6H_5$.

5. Polyfluorène selon l'une des revendications 1 à 4, où m est sensiblement égal à 0.

6. Procédé de préparation de polyfluorène selon l'une des revendications 1 à 4, caractérisé en ce que l'on réalise l'électropolymérisation par oxydation électrochimique, en régime potentiostatique ou intensiostatique d'au moins un monomère du type

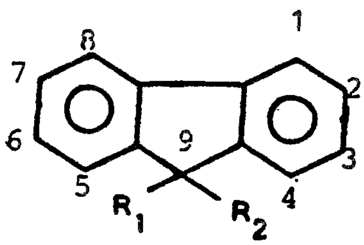

où $R_1$ et $R_2$ ont les mêmes significations que dans la formule I.

7. Procédé selon la revendication 6, caractérisé en ce que l'on réalise l'électropolymérisation à l'aide d'une cellule électrolytique comportant une électrode de référence, une électrode de travail et une contre-électrode, dans une fourchette de tension allant d'environ + 1,3 à + 1,5 V par rapport à l'électrode de référence.

8. Procédé selon la revendication 6 ou 7, caractérisé en ce que l'on choisit le système $Ag/Ag^+$ 0,1 M pour l'électrode de référence.

9. Procédé selon l'une des revendications 6 à 8, caractérisé en ce que l'électrode de travail est réalisée à partir d'un support conducteur non corrodable à la tension d'électropolymérisation, notamment à partir de platine poli, carbone vitreux, graphite, verre recouvert d'un oxyde conducteur ou d'un oxyde mixte conducteur.

**10.** Procédé selon l'une des revendications 6 à 9, caractérisé en ce que la contre électrode est réalisée en platine, en carbone vitreux, ou en acier inoxydable.

**11.** Procédé selon l'une des revendications 6 à 10, caractérisé en ce que la contre électrode consiste en une grille de platine, une plaque de carbone vitreux ou une tige d'acier inoxydable.

**12.** Procédé selon l'une des revendications 6 à 11, caractérisé en ce que l'électropolymérisation est réalisée en présence d'un sel de fond anhydre constitué par un cation ammonium quaternaire ou de métal alcalin et un anion non oxydable au potentiel d'électropolymérisation à une concentration comprise entre 0,1 M et 1 M.

**13.** Procédé selon l'une des revendications 6 à 12, caractérisé en ce que l'anion du sel de fond est choisi parmi $BF_4^-$, $PF_6^-$, $ClO_4^-$.

**14.** Procédé selon l'une des revendications 6 à 13, caractérisé en ce que le sel de fond est $Bu_4NBF_4$.

**15.** Procédé selon l'une des revendications 6 à 14, caractérisé en ce que l'électropolymérisation est réalisée en présence d'un solvant suffisamment conducteur et non oxydable au potentiel d'électropolymérisation, notamment l'acétonitrile, le nitrométhane, le benzonitrile, ou le chlorure de méthylène.

**16.** Procédé selon l'une des revendications 6 à 15, caractérisé en ce que l'électrolymérisation est menée à une concentration en monomères comprise entre environ $5.10^{-2}$ M et $5.10^{-1}$M.

**17.** Procédé selon l'une des revendications 6 à 16, caractérisé en ce que l'électropolymérisation a lieu en présence d'alumine activée.

**18.** Procédé selon l'une des revendications 6 à 17, caractérisé en ce que la cellule électrolytique est balayée par un gaz neutre et sec, notamment l'argon sec pendant l'électropolymérisation.

**19.** Procédé selon l'une des revendications 6 à 18, caractérisé en ce que l'on réalise en outre la réduction indirecte du polyfluorène obtenu par électropolymérisation en vue d'obtenir un polyfluorène où m est sensiblement égal à 0.

**20.** Application des polyfluorènes selon les revendications 1 à 5, à titre de modificateur chimique d'électrode.

**21.** Application des polyfluorènes selon les revendications 1 à 5, notamment les polyfluorènes où $R_1$ et $R_2$ sont différents, à titre de transducteurs électro-optiques, notamment pour la réalisation de cellules électrochromes.

## Claims

**1.** A polyfluorene of the general formula (I)

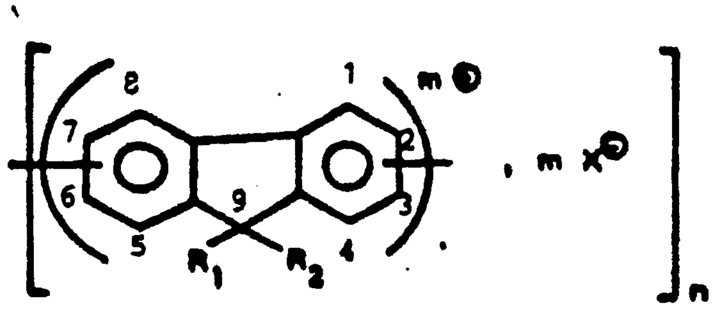

(I)

where

$R_1$ and $R_2$ are identical or different and each represents a linear or branched alkyl, aryl or aralkyl radical containing 1 to 10 carbon atoms or
$R_1$ and $R_2$ together form a benzylidene radical or a dioxolane ring,
X denotes an anion of the fluoroborate, hexafluorophosphate or perchlorate type,
n represents the degree of polymerisation,
m represents the degree of oxidation of the polymer and $0 \leqq m < 1$.

2. A polyfluorene according to claim 1, characterised in that m had a value of about 0.25.

3. A polyfluorene according to claim 1 or 2, characterised in that $R_1$ and $R_2$, which are identical or different, represent $-CH_3$, $-C_2H_5$, $-C_6H_5$, $-(CH_2)_p-C_6H_5$, p being an integer of from 1 to 4, or $R_1$ and $R_2$ together form a benzylidene radical $= CH-C_6H_5$.

4. A polyfluorene according to any one or claims 1 to 3 where $R_1$ denotes $-CH_3$ and $R_2$ denotes $-CH_3$ or $-CH_2-C_6H_5$, or $R_1$ and $R_2$ together form a benzylidene radical $= CH-C_6H_5$.

5. A polyfluorene according to any one of claims, 1 to 4, where m is substantially equal to 0.

6. A process for the preparation of a polyfluorene according to any one of claims 1 to 4, characterised in that electropolymerisation is effected by potentiostatic or intensiostatic electrochemical oxidation of at leant one monomer of the type

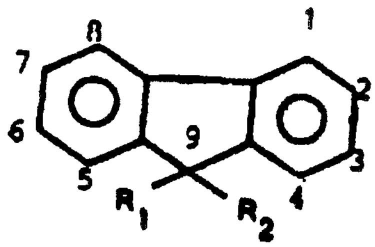

where $R_1$ and $R_2$ have the same meanings, as in formula I.

7. A process according to claim 6, characterised in that the electropolymerisation in effected by means of an electrolytic cell containing a reference electrode, a working electrode and a counter-electrode, in a voltage range from about + 1.3 to + 1.3 V in relation to the reference electrode.

8. A process according to claim 6 or 7, characterised in that the system $Ag/Ag^+$ 0. 1 M is chosen for the reference electrode.

9. A process according to any one of claim, 8 to 8, characterised in that the working electrode is made from a conductive support which is non-corrodable at the electropolymerisation voltage, inter alia from polished platinum, vitreous carbon, graphite, glass covered with a conductive oxide or with a conductive mixed oxide.

10. A process according to any one of claims 6 to 9, characterised in that the counter-electrode is made from platinum, vitreous carbon, or stainless steel.

11. A process according to any one of claims 6 to 11, characterised in that the counter-electrode comprises a platinum grid, a vitreous carbon plate, or a stainless steel rod.

12. A process according to any one of claims 6 to 11, characterised in that the electropolymerisation is effected in the presence of an anhydrous ground salt comprising a quaternary ammonium cation or alkali metal and an anion which in non-oxidizable at the electropolymerisation potential in a concentration of between 0.1 M and 1 M.

13. A process according to any one of claims 6 to 12, characterised in that the ground salt anion is

selected from $BF_4$-, $PF_6$-, $C10_4$-.

**14.** A process according to any one of claims 6 to 13, characterised in that the ground salt in $Bu_4NBF_4$.

**15.** A process according to any one of claims 6 to 14, characterised in that the electropolymerisation is effected in the presence of a solvent which is sufficiently conductive and non-oxidisable at the electropolymerisation potential, inter alia acetonitrile, nitromethane, benzonitrile, or methylene chloride.

**16.** A process according to any one of claims 6 to 15, characterised in that the electropolymerisation is effected in a monomer concentration of between about $5.\ 10^{-2}$ M and $5.\ 10^{-1}$ M.

**17.** A process according to any one of claims 6 to 16, characterised in that the electropolymerisation is effected in the presence of activated alumina.

**18.** A process according to any one of claims 6 to 17, characterised in that the electrolytic cell is swept by a neutral and dry gas, inter alia dry argon, during the electropolymerisation.

**19.** A process according to any one of claims 6 to 18, characterised in that indirect reduction of the polyfluorene obtained by electropolymerisation in also effected to produce a polyfluorene where m is substantially equal to 0.

**20.** Application of the polyfluorenes according to claims 1 to 5 as a chemical electrode modifier.

**21.** Application of the polyfluorenes according to claims 1 to 5, inter alia the polyfluorenes where $R_1$ and $R_5$ are different, as electro-optical transducers, inter alia for the production of electrochromic cells.

**Ansprüche**

**1.** Polyfluoren der allgemeinen Formel I:

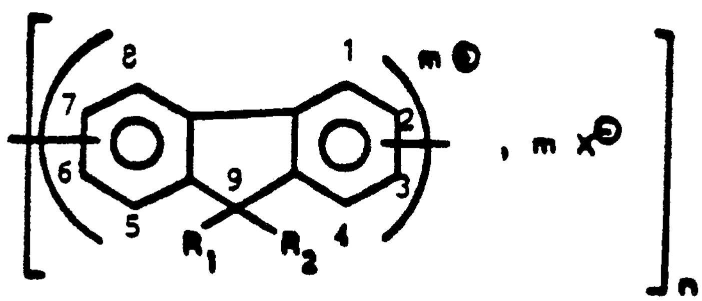

(I)

worin
$R_1$ und $R_2$ gleich oder verschieden sind und jeweils einen Alkyl-, Aryl- oder Aralkylrest, linear oder verzweigt, mit 1 bis 10 Kohlenstoffatomen darstellen, oder
$R_1$ und $R_2$ zusammen einen Benzylidenrest oder einen Dioxolanring bilden,
X ein Anion vom Typ Fluoroborat, Hexafluorophosphat oder Perchlorat darstellt,
n den Polymerisationsgrad darstellt,
m den Oxidationsgrad des Polymeren darstellt und $0 \leqq m < 1$.

**2.** Polyfluoren nach Anspruch 1, dadurch gekennzeichnet, daß m einen Wert von etwa 0,25 hat.

**3.** Polyfluoren nach einem der Ansprüche 1 oder 2, dadurch gekennzeichnet, daß $R_1$ und $R_2$, die gleich oder verschieden sein können, $-CH_3$, $-C_2H_5$, $-C_6H_5$, $-(CH_2)_p-C_6H_5$ bedeuten, worin p eine ganze Zahl von 1 bis 4 darstellt, oder $R_1$ und $R_2$ zusammen einen Benzylidenrest = $CH-C_6H_5$ bilden.

4. Polyfluoren nach einem der Ansprüche 1 bis 3, worin $R_1$ $-CH_3$ bedeutet und $R_2$ $-CH_3$ oder $-CH_2-C_6H_5$ bedeutet, oder worin $R_1$ und $R_2$ zusammen einen Benzylidenrest = $CH-C_6H_5$ bilden.

5. Polyfluoren nach einem der Ansprüche 1 bis 4, worin m genau 0 ist.

6. Verfahren zur Herstellung von Polyfluoren nach einem der Ansprüche 1 bis 4, dadurch gekennzeichnet, daß man die Elektropolymerisation durch elektrochemische Oxidation unter potentiostatischen oder intensiostatischen Bedingungen von mindestens einem Monomeren des Typs

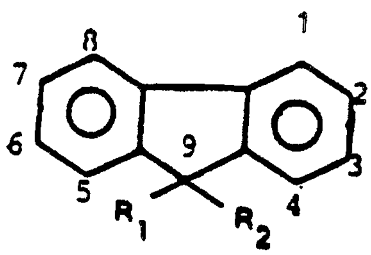

worin $R_1$ und $R_2$ die gleichen Bedeutungen wie in der Formel (I) haben, durchführt.

7. Verfahren nach Anspruch 6, dadurch gekennzeichnet, daß man die Elektropolymerisation mittels einer Elektrolysezelle durchführt, die eine Bezugselektrode, eine Arbeitselektrode und eine Gegenelektrode in einem Spannungsbogen von etwa +1,3 bis +1,5 V, bezogen auf die Bezugselektrode, durchführt.

8. Verfahren nach Anspruch 6 oder 7, dadurch gekennzeichnet, daß man das System $Ag/Ag^+$, O,1 M, für die Bezugselektrode wählt.

9. Verfahren nach einem der Ansprüche 6 bis 8, dadurch gekennzeichnet, daß die Arbeitselektrode aus einem durch die Elektropolymerisations-Spannung nicht korrodierbaren Leiterträger besteht, insbesondere aus poliertem Platin, glasartigem Kohlenstoff, Graphit, einem mit leitfähigem Oxid überzogenen Glas oder einem gemischten Oxid-Leiter.

10. Verfahren nach einem der Ansprüche 6 bis 9, dadurch gekennzeichnet, daß die Gegenelektrode aus Platin, glasartigem Kohlenstoff oder rostfreiem Stahl besteht.

11. Verfahren nach einem der Ansprüche 6 bis 10, dadurch gekennzeichnet, daß die Gegenelektrode aus einem Platingitter, einer Platte aus glasartigem Kohlenstoff oder einem Stab aus rostfreiem Stahl besteht.

12. Verfahren nach einem der Ansprüche 6 bis 11, dadurch gekennzeichnet, daß die Elektropolymerisation in Anwesenheit eines wasserfreien Schmelzsalzes durchgeführt wird, das aus einem quaternären Ammonium-oder Alkalimetall-Kation und einem beim Elektropolymerisations-Potential nicht oxidierbaren Anion, in einer Konzentration von 0,1 M bis 1 M, besteht.

13. Verfahren nach einem der Ansprüche 6 bis 12, dadurch gekennzeichnet, daß das Anion des Schmelzsalzes ausgewählt wird aus $BF_4^-$, $PF_6^-$, $C1O_4^-$.

14. Verfahren nach einem der Ansprüche 6 bis 13, dadurch gekennzeichnet, daß das Schmelzsalz $Bu_4NBF_4$ ist.

15. Verfahren nach einem der Ansprüche 6 bis 14, dadurch gekennzeichnet, daß die Elektropolymerisation in Anwesenheit eines ausreichend leitfähigen und beim Elektropolymerisations-Potential nicht oxidierbaren Lösungsmittel, insbesondere Acetonitril, Nitromethan, Benzonitril oder Methylenchlorid, durchgeführt wird.

16. Verfahren nach einem der Ansprüche 6 bis 15, dadurch gekennzeichnet, daß die Elektropolymerisation bis zu einer Konzentration der Monomeren von etwa $5.10^{-2}$ M bis $5.10^{-1}$ M durchgeführt wird.

**17.** Verfahren nach einem der Ansprüche 6 bis 16, dadurch gekennzeichnet, daß die Elektropolymerisation in Anwesenheit von aktiviertem Aluminiumoxid durchgeführt wird.

**18.** Verfahren nach einem der Ansprüche 6 bis 17, dadurch gekennzeichnet, daß die Elektrolysezelle mit einem neutralen und trockenem Gas, insbesondere trockenem Argon, während der Elektropolymerisation gespült wird.

**19.** Verfahren nach einem der Ansprüche 6 bis 18, dadurch gekennzeichnet, daß man außerdem die indirekte Reduktion des durch Elektropolymerisation erhaltenen Polyfluorens durchführt, um ein Polyfluoren zu erhalten, worin m genau 0 ist.

**20.** Verwendung der Polyfluorene nach den Ansprüchen 1 bis 5 als chemische Elektrodenmodifikatoren.

**21.** Verwendung der Polyfluorene nach den Ansprüchen 1 bis 5, insbesondere der Polyfluorene, worin $R_1$ und $R_2$ verschieden sind, als elektrooptische Überträger, insbesondere zur Verwirklichung von elektrochromen Zellen.

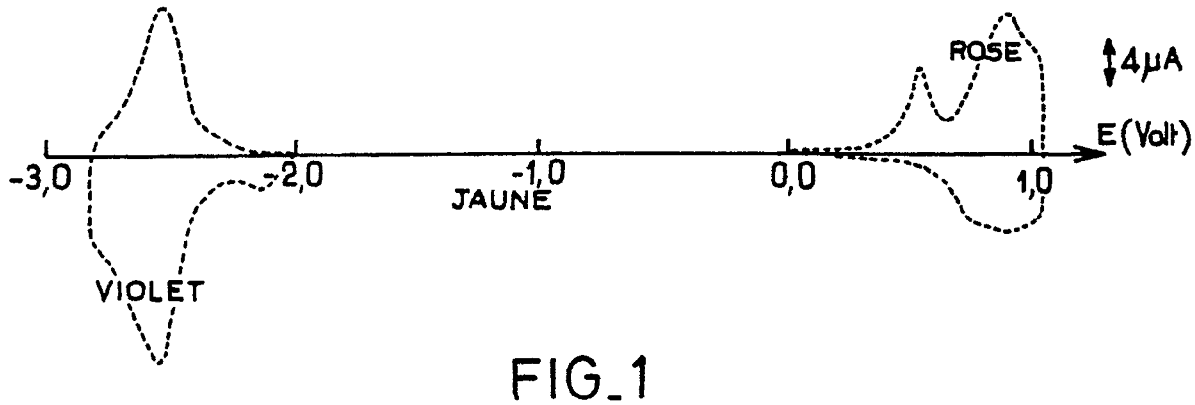


FIG_1

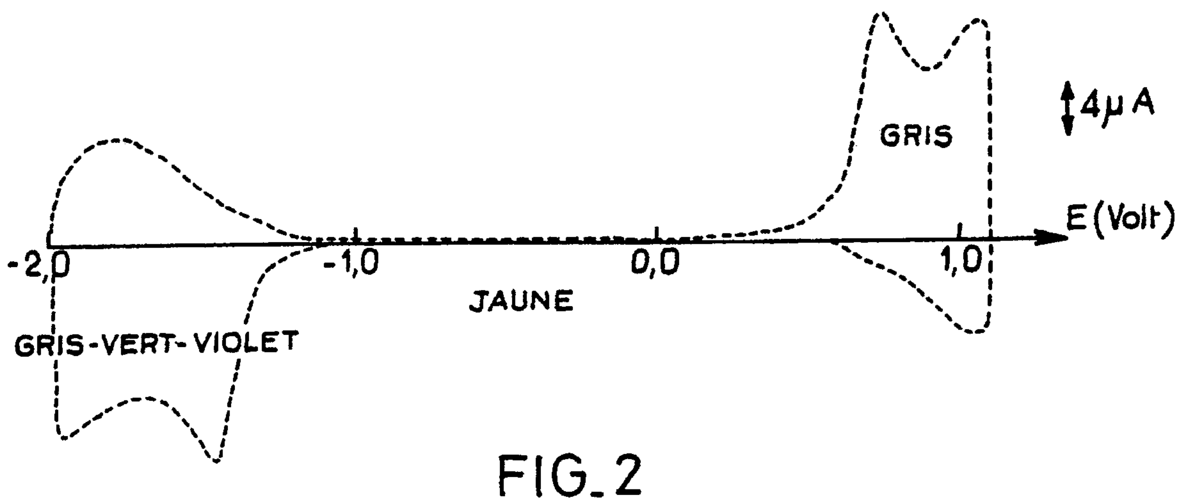


FIG_2

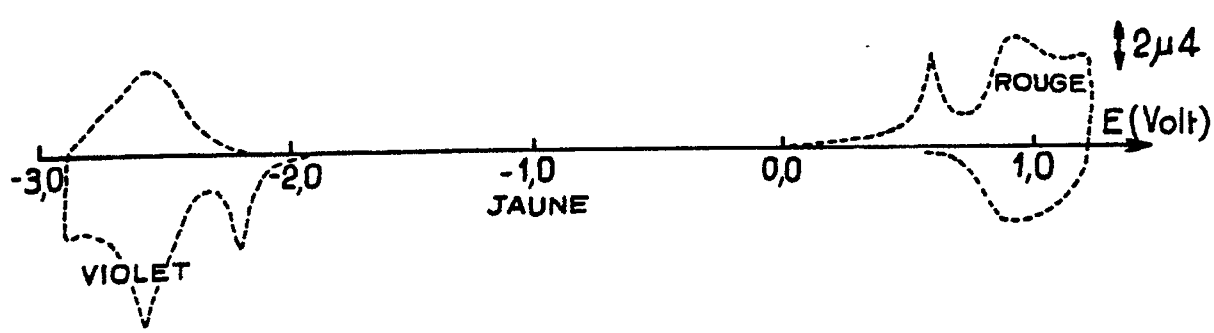


FIG_3

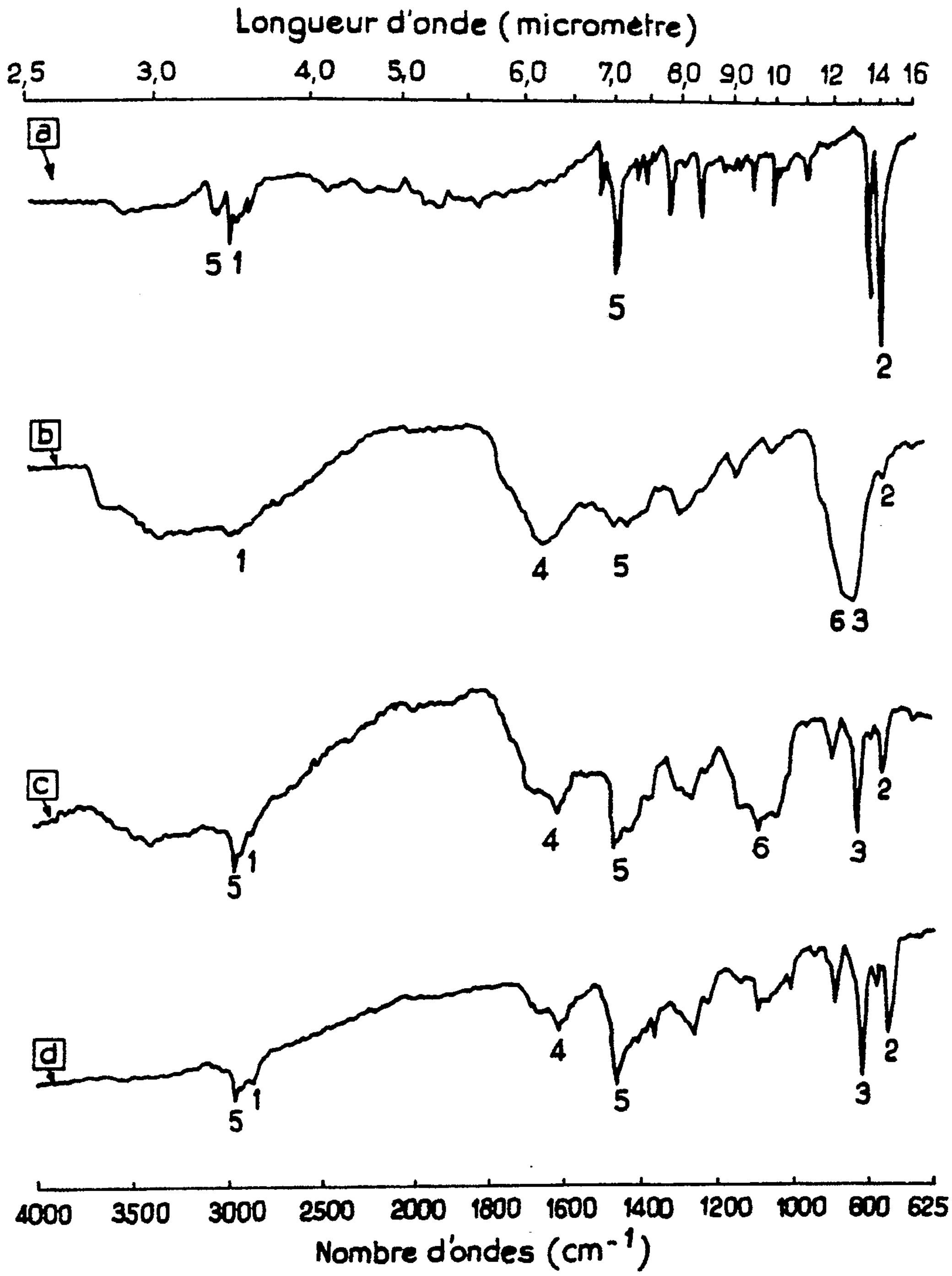
Longueur d'onde (micromètre)
2,5
3,0
4,0
5,0
6,0
7,0
8,0
9,0
10
12
14
16
a
5 1
5
2
b
1
4
5
6 3
2
c
5
1
4
5
6
3
2
d
5
1
4
5
3
2
4000
3500
3000
2500
2000
1800
1600
1400
1200
1000
800
625
Nombre d'ondes (cm⁻¹)

FIG.4